(19) Europäisches Patentamt
European Patent Office
Office européen des brevets

(11) Veröffentlichungsnummer : **0 203 890**
**B1**

(12) # EUROPÄISCHE PATENTSCHRIFT

(45) Veröffentlichungstag der Patentschrift : **03.01.90**

(51) Int. Cl.5 : **D 06 P 3/06**, D 06 P 1/673, C 09 B 67/24, C 09 B 67/22

(21) Anmeldenummer : **86810218.7**

(22) Anmeldetag : **20.05.86**

(54) **Verfahren zum Färben von Fasermaterial aus natürlichen Polyamiden mit Farbstoffmischungen.**

(30) Priorität : **24.05.85 CH 2219/85**

(43) Veröffentlichungstag der Anmeldung : **03.12.86 Patentblatt 86/49**

(45) Bekanntmachung des Hinweises auf die Patenterteilung : **03.01.90 Patentblatt 90/01**

(84) Benannte Vertragsstaaten : **BE CH DE FR GB IT LI**

(56) Entgegenhaltungen :
**EP-A- 0 163 608**
**GB-A- 1 090 946**
**US-A- 3 592 584**
**US-A- 3 630 662**
**US-A- 3 990 842**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Back, Gerhard, Dr.**
**Hammerstrasse 5**
**D-7850 Lörrach (DE)**
Erfinder : **Mosimann, Walter, Dr.**
**Pappelstrasse 26**
**CH-4106 Therwil (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 203 890 B1**

Jouve, 18, rue St-Denis, 75001 Paris, France

**Patentanspruch**

Die vorliegende Erfindung betrifft ein neues Verfahren zum faser- und flächenegalen Färben von natürlichen textilen Polyamidfasermaterialien mit Farbstoffmischungen, enthaltend sulfogruppenhaltige 1 :1-Metallkomplexfarbstoffe und metallfreie sulfonsäuregruppenhaltige Farbstoffe aus wässriger Flotte in Gegenwart von Alkali- oder Ammoniumfluorid, Alkali- oder Ammoniumfluorosilikat, Alkali- oder Ammoniumfluoroborat, Alkali- oder Ammoniumfluorozirkonat oder Alkali- oder Ammoniumfluorosulfonat, gegebenenfalls in Gegenwart eines Hilfsmittels, wobei bei einem faserschonenden pH-Wert von 3 bis 7 gefärbt wird, das Färbebad praktisch vollständig ausgezogen wird, die Färbung gut durchgefärbt ist und gute Gesamtechtheiten, insbesondere gute Nassechtheiten und gute Lichtechtheit zeigt, sowie das nach dem neuen Verfahren gefärbte Material und ein Mittel zur Ausführung des Verfahrens.

Nachteil der bisher üblichen Färbeverfahren für natürliche Polyamidmaterialien mit 1 :1-Metallkomplexfarbstoffen oder Mischungen von 1 :1-Metallkomplexfarbstoffen mit metallfreien Säurefarbstoffen ist, dass diese Farbstoffe oder Mischungen bei einem pH-Wert von ca. 1,9 bis 2,8 gefärbt werden müssen, um egale Färbungen zu erhalten. Dem pH-Wert des Färbebades kommt beim Färben von natürlichen Polyamidmaterialien, insbesondere beim Färben von Wolle, neben der Färbedauer eine entscheidende Bedeutung zu, da natürliche Polyamidmaterialien, insbesondere die Wolle sowohl im stark sauren wie im alkalischen pH-Bereich stark angegriffen werden.

Ueberraschenderweise wurde nun ein neues Verfahren gefunden, das die genannten Nachteile nicht aufweist und welches erlaubt, auf einfache Art und Weise natürliche textile Polyamidfasermaterialien im faserschonenden pH-Bereich von 3 bis 7, insbesondere 3 bis 6, vorzugsweise 3,5 bis 5, zu färben.

Gegenstand der vorliegenden Erfindung ist somit ein Verfahren zum Färben von Fasermaterial aus natürlichen Polyamiden aus wässriger Flotte mit Farbstoffmischungen in Gegenwart von Alkali- oder Ammoniumsalzen und gegebenenfalls in Gegenwart von Hilfsmitteln, welches dadurch gekennzeichnet ist, dass man diese Fasermaterialien mit einer Mischung enthaltend mindestens einen sulfogruppenhaltigen 1 :1-Metall-komplexfarbstoff und mindestens einen sulfogruppenhaltigen metallfreien Farbstoff in Gegenwart von Alkali- oder Ammoniumfluorid, Alkali- oder Ammoniumfluorosilikat, Alkali- oder Ammoniumfluoroborat, Alkali- oder Ammoniumfluorozirkonat oder Alkali- oder Ammoniumfluorosulfonat bei einem pH-Wert von 3 bis 7 färbt.

Die verwendbaren sulfogruppenhaltigen 1 :1-Metallkomplexfarbstoffe sind vorzugsweise Monoazo- oder Disazofarbstoffe, die als Metallion ein Chromion enthalten. Ebenfalls können 1 :1-Metallkomplexazomethinfarbstoffe verwendet werden, die vorzugsweise ein Chromion enthalten.

Die verwendbaren sulfogruppenhaltigen metallfreien Farbstoffe sind vorzugsweise sauer bis stark sauer ziehende Säurefarbstoffe aus der Reihe der Monoazo- oder Polyazo-, Anthrachinon-, Triphenylmethan- oder Xanthen-Farbstoffe, welche die für Säurefarbstoffe üblichen Substituenten enthalten können. Die sulfogruppenhaltigen metallfreien Farbstoffe können durch faserreaktive Reste substituiert sein.

Die Mengen, in denen die definierten Farbstoffmischungen in den Färbebädern verwendet werden, können je nach der gewünschten Farbtiefe in weiten Grenzen schwanken, im allgemeinen haben sich Mengen von 0,01 bis 10 Gewichtsprozent, bezogen auf das Färbegut, einer oder mehrerer Farbstoffmischungen als vorteilhaft erwiesen.

Das Färben von natürlichen Polyamidfasermaterialien mit 1 :1-Metallkomplexfarbstoffen oder deren Mischung mit metallfreien Farbstoffen in Gegenwart von Alkalisulfat oder -chlorid, wie z. B. Natriumsulfat und Natriumchlorid, und gegebenenfalls einem Hilfsmittel ist seit langem bekannt. Ueberraschenderweise ermöglicht die Verwendung von Alkalifluorid, Ammoniumfluorid, Alkali- oder Ammoniumfluorosilikat, Alkali- oder Ammoniumfluoroborat, Alkali- oder Ammoniumfluorozirkonat oder Alkali- oder Ammoniumfluorosulfonat, gegebenenfalls in Gegenwart eines Hilfsmittels, das Färben dieser Fasermaterialien im faserschonenden pH-Bereich, wobei gut und egal durchgefärbte Färbungen erhalten werden.

Als Alkalifluorid wird in dem erfindungsgemässen Verfahren vorzugsweise Natrium- oder Kaliumfluorid verwendet.

Als Alkali- oder Ammoniumfluorosilikat wird in dem erfindungsgemässen Verfahren das Alkali- oder Ammoniumsalz der Hexafluorokieselsäure verwendet. Vorzugsweise wird $Na_2SiF_6$, $K_2SiF_6$ oder $(NH_4)_2SiF_6$ verwendet.

Als Alkali- oder Ammoniumfluoroborat wird in dem erfindungsgemässen Verfahren das Alkali- oder Ammoniumsalz der Fluoroborsäure verwendet. Vorzugsweise wird $NaBF_4$, $KBF_4$ oder $NH_4BF_4$ verwendet.

Als Alkali- oder Ammoniumfluorozirkonat wird in dem erfindungsgemässen Verfahren das Alkali- oder Ammoniumhexafluorozirkonat verwendet. Vorzugsweise wird $K_2(ZrF_6)$ verwendet.

Als Alkali- oder Ammoniumfluorosulfonat werden in dem erfindungsgemässen Verfahren Alkali- oder Ammoniumsalze der Fluorosulfonsäure, vorzugsweise $NaFSO_3$, $KFSO_3$ oder $NH_4FSO_3$, verwendet.

Bevorzugte Ausführungsarten des erfindungsgemässen Verfahrens sind dadurch gekennzeichnet, dass man

a) in Gegenwart von Alkali- oder Ammoniumfluorid, insbesondere Natrium- oder Kaliumfluorid, oder

Ammoniumfluorid, gegebenenfalls in Gegenwart eines Hilfsmittels oder eines Hilfsmittelgemisches, färbt ;

b) in Gegenwart von Alkali- oder Ammoniumfluorosilikat, insbesondere Natrium- oder Kaliumfluorosilikat, oder Ammoniumfluorosilikat färbt ;

c) in Gegenwart von Alkali- oder Ammoniumfluoroborat färbt ;

d) in Gegenwart von Alkali- oder Ammoniumhexafluorozirkonat, insbesondere $K_2(ZrF_6)$, färbt ;

e) in Gegenwart von Alkali- oder Ammoniumfluorosulfonat, insbesondere $KFSO_3$, färbt.

Eine besonders bevorzugte Ausführungsform des erfindungsgemässen Verfahrens ist dadurch gekennzeichnet, dass in Gegenwart von Alkali- oder Ammoniumfluorid, Alkali- oder Ammoniumfluorosilikat oder Alkali- oder Ammoniumfluoroborat gefärbt wird.

Die Menge, in der das Alkali- oder Ammoniumfluorid, Alkali- oder Ammoniumfluorosilikat, Alkali- oder Ammoniumfluoroborat, Alkali- oder Ammoniumfluorozirkonat oder Alkali- oder Ammoniumfluorosulfonat in den Färbebädern verwendet wird, kann in weiten Grenzen schwanken, im all-gemeinen hat sich die halbe bis vierfache Gewichtsmenge, vorzugsweise die ein- bis dreifache und insbesondere die zwei- bis dreifache Gewichtsmenge, bezogen auf die eingesetzte Farbstoffgewichtsmenge, an Alkali- oder Ammoniumfluorid, -fluorosilikat, -fluoroborat, -fluorozirkonat oder -fluorosulfonat als vorteilhaft erwiesen.

Die in dem erfindungsgemässen Verfahren gegebenenfalls verwendbaren Hilfsmittel sind an sich bekannt und werden nach bekannten Methoden hergestellt. Vorzugsweise handelt es sich um Egalisierhilfsmittel oder Mischungen verschiedener Egalisierhilfsmittel ; dabei kommen anionaktive Mittel, kationaktive Mittel, nichtionogene Mittel und amphotere Mittel oder deren Mischungen in Betracht.

Als anionaktive Mittel seien beispielsweise genannt : substituierte Naphthalinsulfonsäuren, Schwefelsäurehalbester von Aethoxylierungsprodukten, Salze von längerkettigen Alkansulfonsäuren, Salze von Alkylarylsulfonsäuren, insbesondere Dodecylbenzolsulfonsäuren, Fettsäureamidsulfonsäuren, Schwefelsäurehalbester von Fett-amin-polyglykoläthern. Als kationaktive Mittel seien beispielsweise genannt : Polyglykoläther der Fettamine, Polyglykoläther der Fettsäure-amidamine, quaternäre Ammoniumverbindungen. Als nichtionogene Mittel seien beispielsweise genannt : Polyglykoläther von Fettalkoholen, von Alkylphenolen, von Harzsäuren, von Fettsäurealkylolamiden. Als amphotere Mittel seien beispielsweise genannt : Reaktionsprodukte von äthoxylierten Fettaminen und Hydroxyäthansulfonsäuren, Reaktionsprodukte aus Phenol und Styrol, Polyäthylenglykoldifettsäureester.

Vorzugsweise verwendet man Egalisierhilfsmittel enthaltend Verbindungen der Formel

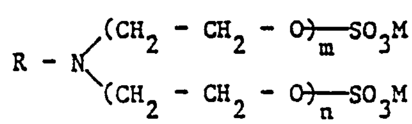 (1)

worin R einen Alkyl- oder Alkenylrest mit 12 bis 22 Kohlenstoffatomen, M Wasserstoff, Alkalimetall oder Ammonium und m und n ganze Zahlen bedeuten, wobei die Summe von m und n 2 bis 14 ist, oder der Formel

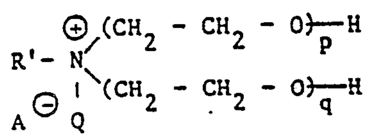 (2)

worin R' unabhängig von R die für R angegebene Bedeutung hat, A ein Anion, Q einen gegebenenfalls substituierten Alkylrest und p und q ganze Zahlen bedeuten, wobei die Summe von p und q 2 bis 50 ist, oder der Formel

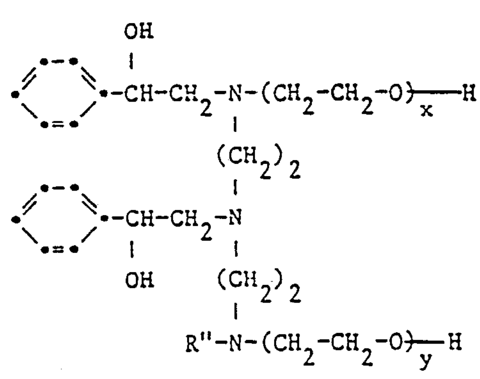 (3)

worin R'' unabhängig von R die für R angegebene Bedeutung hat und x und y ganze Zahlen bedeuten, wobei die Summe von x und y 80 bis 140 ist, eine Mischung enthaltend Verbindungen der Formel (1) und (2) oder eine Mischung enthaltend Verbindungen der Formeln (1), (2) und (3).

Insbesondere verwendet man Egalisier-Hilfsmittelgemische enthaltend 5 bis 70 Gewichtsteile der Verbindungen der Formel (1), 15 bis 60 Gewichtsteile der Verbindung der Formel (2) und 5 bis 60 Gewichtsteile der Verbindung der Forme (3), bezogen auf 100 Gewichtsteile des Egalisier-Hilfsmittelgemisches, wobei in den Formeln (1), (2) und (3) R, R' und

R'' unabhängig voneinander einen Alkyl- oder Alkenylrest mit 16 bis 22 Kohlenstoffatomen bedeuten.

Mit Vorteil verwendet man eine Verbindung der Formel (2), worin sich A und Q von den Quaternisierungsmitteln Chloracetamid, Aethylenchlorhydrin, Aethylenbromhydrin, Epichlorhydrin, Epibromhydrin oder vorzugsweise Dimethylsulfat ableiten.

In dem erfindungsgemässen Verfahren verwendet man insbesondere ein Egalisierhilfsmittelgemisch, welches ausser den Verbindungen der Formeln (1), (2) und (3), wobei die Summe von p und q in Formel (2) vorzugsweise 20 bis 50 ist, noch en Addukt von 60 bis 100 Molen Aethylenoxid an ein Mol $C_{15-20}$-Alkenylalkohol enthält.

Ebenfalls bevorzugt ist die Verwendung eines Egalisierhilfsmittelgemisches, welches die Verbindungen der Formeln (1) und (2) enthält, worin die Summe der Symbole p und q in Formel (2) 4 bis 10 ist.

Bevorzugt ist ferner die Verwendung eines Egalisierhilfsmittelgemisches aus Verbindungen der Formel (2), worin die Summe der Symbole p und q in Formel (2) 30 bis 40 ist und R' ein Alkylrest mit 15 bis 22 Kohlenstoffatomen ist.

Die Menge, in der das Egalisierhilfsmittel oder das Egalisierhilfsmittelgemisch in den Färbebädern verwendet wird, kann in weiten Grenzen schwanken, im allgemeinen hat sich eine Menge von 0,3 bis 3 Gewichtsprozent, vorzugsweise 1 bis 2 Gewichtsprozent, bezogen auf das Fasermaterial, an Egalisierhilfsmittel oder Egalisierhilfsmittelgemisch als vorteilhaft erwiesen.

Als weitere Hilfsmittel können die Färbedäder Mineralsäuren, wie Schwefelsäure, Sulfaminsäure oder Phosphorsäure, organische Säuren, zweckmässig niedere, aliphatische Carbonsäuren, wie Ameisen-, Essig- oder Maleinsäure, enthalten. Die Säuren dienen vor allem der Einstellung des pH-Wertes der erfindungsgemäss verwendeten Flotten.

Vorzugsweise erfolgt die Einstellung des pH-Wertes von 3 bis 7 mit einer organischen Säure, insbesondere Essigsäure oder Ameisensäure.

Vorzugsweise färbt man bei einem pH-Wert von 3 bis 6, insbesondere 3,5 bis 5 und vorzugsweise 4 bis 5.

Ferner kann die Färbeflotte von Akali- oder Ammoniumfluorid, -fluorosilikat, -fluoroborat, -fluorozirkonat oder -fluorosulfonat, verschiedene Salze, insbesondere Ammonium- oder Alkalisalze wie z. B. Ammoniumsulfat, Ammoniumacetat oder vorzugsweise Natriumacetat oder Natriumsulfat als Hilfsmittel enthalten. Vorzugsweise werden 0,1 bis 10 Gewichtsprozent Ammonium- oder Alkalisalze, bezogen auf das Fasermaterial, verwendet.

Die in dem erfindungsgemässen Verfahren verwendbaren Farbstoffmischungen sind vorzugsweise Mischungen, welche mindestens einen 1 : 1-Chromkomplex-azo- oder -azomethin-farbstoff mit 1 bis 3 Sulfonsäuregruppen, insbesondere 1 bis 2 Sulfonsäuregruppen, und mindestens einen metallfreien Farbstoff mit 1 bis 2 Sulfonsäuregruppen enthalten.

Insbesondere werden in dem erfindungsgemässen Verfahren als metallfreie sulfogruppenhaltige Farbstoffe solche mit gutem Migriervermögen verwendet. Das Migriervermögen dieser Farbstoffe soll dem Migriervermögen der 1 : 1-Chromkomplexazo- oder -azomethinfarbstoffe entsprechen.

Als gutes Migriervermögen, gefärbt bei pH 4 bis 5 und als Stärkedifferenz gemessen, hat sich ein Bereich von 25 bis 50 % als vorteilhaft erwiesen.

Das Migriervermögen wird auf Wolle bestimmt, indem eine in 1/1 Richtyptiefe gefärbte Probe zusammen mit einer gewichtsgleichen ungefärbten Probe in einem Blindbad behandelt wird.

Die Behandlungsbedingungen zur Bestimmung des Migriervermögens entsprechen bezüglich Flottenverhältnis, pH und Behandlungsdauer den in Beispiel 1 angegebenen Bedingungen. Die Bewertung erfolgt durch spektrophotometrische Bestimmung der Farbstoffmenge auf der ursprünglich ungefärbten Wolle in Prozent der ursprünglich gefärbten Wolle.

Geeignete metallfreie sulfogruppenhaltige Farbstoffe sind beispielsweise C.I. Acid Blue 1, 7, 13, 23, 30, 40 : 1, 43, 45, 47, 72, 147, 258 und 277 ; C.I. Acid Red 1, 5, 37, 42, 52, 57 und 361 ; C.I. Acid Yellow 10, 17, 25, 27, 99 und 219 ; C.I. Acid Orange 1, 3 und 156 ; C.I. Acid Green 3, 9 und 16 ; C.I. Acid Violet 9 und 36 ; C.I. Acid Brown 10, 11 und 248.

In dem erfindungsgemässen Verfahren können gegebenenfalls auch Mischungen mehrerer definitionsgemässer Farbstoffmischungen verwendet werden.

Bevorzugt ist eine Mischung definitionsgemässer Farbstoffmischungen, welche

a) mindestens zwei 1 : 1-Chromkomplexazo- oder -azomethinfarbstoffe und mindestens einen sulfogruppenhaltigen metallfreien Farbstoff entahlt ; und

b) mindestens drei 1 : 1-Chromkomplexazo- oder -azomethinfarbstoffe und mindestens einen sulfogruppenhaltigen metallfreien Farbstoff enthält ; oder

c) zum Trichromiefärben mindestens drei 1 : 1-Chromkomplexazo- oder azomethinfarbstoffe aus gelb- bzw. orange-, rot- und blaufärbenden Farbstoffen und mindestens einen sulfogruppenhaltigen metallfreien Farbstoff aus gelb- bzw. orange- und/oder rot- und/oder blaufärbenden Farbstoffen enthält.

Unter Trichromie ist dabei die Farbsmischung passend gewählter gelb- bzw. orange-, rot- und blaufärbender Farbstoffe zu verstehen, mit denen jede gewünschte Nuance des sichtbaren Farbspektrums durch geeignete Wahl der Mengenverhältnisse der Farbstoffe eingestellt werden kann.

Insbesondere werden in dem erfindungsgemässen Verfahren als 1 : 1-Chromkomplexazo- oder -azomethinfarbstoffe solche der Formel

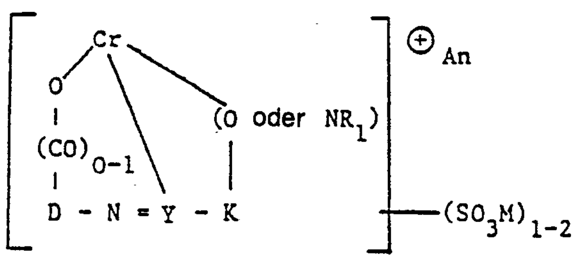

(4)

verwendet, worin $-(CO)_{0-1}-O-$ und (O oder $NR_1$) in Nachbarstellung zur Azobrücke an D und K gebunden sind, D der Rest einer Diazokomponente der Benzol- oder Naphthalinreihe, K der Rest einer Kupplungskomponente der Benzol-, Naphthalin- oder heterocyclischen Reihe oder der Acetessigsäurearylidreihe, $R_1$ Wasserstoff, oder ein gegebenenfalls substituierter Alkyl- oder Phenylrest, M ein Kation und An ein Anion ist, und Y das Stickstoffatom oder die CH-Gruppe bedeutet.

Bevorzugt werden in dem erfindungagemässen Verfahren sulfogruppenhaltige 1 : 1-Chromkomplexazo- oder -azomethinfarbstoffe der Formel (4) verwendet, worin D ein gegebenenfalls durch Halogen, $C_{1-4}$-Alkyl, $C_{1-4}$-Alkoxy, Nitro oder Sulfamoyl substituierter Benzol- oder Naphthalinrest, K ein gegebenenfalls durch halogen, $C_{1-4}$-Alkyl, $C_{1-4}$-Alkoxy, $C_{2-4}$-Alkanoylamino, Sulfamoyl oder Hydroxy substituierter Phenyl-, Naphthyl-, 1-Phenyl-3-methylpyrazolon-(5)-, Acetoacetamid-, insbesondere Acetacetoanilid- oder Chinolinrest, $R_1$ Wasserstoff und M ein Alkalikation ist.

Vorzugsweise bedeutet Y in Formel (4) das Stickstoffatom.

Insbesondere werden in dem erfindungsgemässen Verfahren als sulfonsäuregruppenhaltige metallfreie Farbstoffe solche der weiter oben genannten Farbstoffreihen verwendet, die z. B. substituiert sein können durch Alkylgruppen mit 1 bis 4 Kohlenstoffatomen, wie Methyl, Aethyl, Propyl, Isopropyl und Butyl, Alkoxygruppen mit 1 bis 4 Kohlenstoffatomen, wie Methoxy, Aethoxy, Propoxy, Isopropoxy and Butoxy, Acylaminogruppen mit 1 bis 6 Kohlenstoffatomen, wie Acetylamino und Propionylamino, Benzoylamino, Amino, Alkylamino mit 1 bis 4 Kohlenstoffatomen, Phenylamino, Alkoxycarbonyl mit 1 bis 4 Kohlenstoffatomen im Alkoxyrest, Nitro, Acetyl, Cyano, Trifluormethyl, Halogen, wie Fluor, Chlor und Brom, Sulfamoyl, Carbamoyl, Ureido, Hydroxy, Carboxy und Sulfomethyl.

Ferner können die sulfonsäuregruppenhaltigen metallfreien Farbstoffe durch ein oder mehrere faserreaktive Reste substituiert sein. Als faserreaktive Reste kommen beispieslweise die in der DE-OS 29 13 102 genannten Reste in Betracht.

In dem erfindungsgemässen Verfahren werden vorzugsweise Mischungen von sulfogruppenhaltigen 1 : 1-Metallkomplexfarbstoffen und sulfogruppenhaltigen metallfreien Farbstoffen im Gewichtsverhältnis von 40 : 60 bis 95 : 5 verwendet.

Die im erfindungsgemässen Verfahren verwendeten sulfogruppenhaltigen Farbstoffe liegen entweder in Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Triäthanolamins genannt.

Die in dem erfindungsgemässen Verfahren verwendeten sulfogruppenhaltigen 1 : 1-Metallkomplexfarbstoffe und die sulfogruppenhaltigen metallfreien Farbstoffe sind an sich bekannt und werden nach bekannten Methoden erhalten.

Die in dem erfindungsgemässen Verfahren verwendeten Farbstoffmischungen können durch Mischung der Einzelfarbstoffe hergestellt werden. Dieser Mischpozess erfolgt beispielsweise in geeigneten Mühlen, z. B. Kugel- oder Stiftmühlen, sowie in Knetern oder Mixern.

Ferner können die Farbstoffmischungen durch Zerstäubungstrocknen der wässrigen Farbstoffmischungen hergestellt werden.

Die Färbebäder können neben dem Farbstoff und den genannten Hilfsmitteln noch weitere übliche Zusätze wie z. B. Wollschutz-, Netz- und Entschäumungsmittel enthalten.

Das Flottenverhältnis kann innerhalb eines weiten Bereiches gewählt werden, von 1 : 6 bis 1 : 80, vorzugsweise 1 : 10 bis 1 : 30.

Das Färben erfolgt aus wässriger Flotte nach dem Ausziehverfahren z. B. bei Temperaturen zwischen 80 und 105 °C bzw. 110 °C bei Verwendung eines Formaldehyd-abspaltenden Wollschutzmittels, vorzugsweise zwischen 98 und 103 °C.

Die Färbedauer beträgt in der Regel 30 bis 120 Minuten.

Besondere Vorrichtungen sind beim erfindungsgemässen Verfahren nicht erforderlich. Es können die üblichen Färbeapparate und -maschinen, beispielsweise für Flocke, Kammzug, Stranggarn, Wickelkörper, Stückware und Teppiche verwendet werden.

Das Egalisierhilfsmittel und das Alkali- oder Ammoniumfluorid, -fluorosilikat, -fluoroborat, -fluorozirkonat oder -fluorosulfonat, wird zweckmässigerweise der wässrigen Farbstoff-Flotte zugemischt und gleichzeitig mit der Farbstoffmischung appliziert. Man kann auch so vorgehen, dass man das Färbegut zuerst mit dem Egalisierhilfsmittel behandelt und im gleichen Bad nach Zugabe der Farbstoffmischung und des Alkali- oder Ammoniumfluorids, -fluorosilikats, -fluoroborats, -fluorozirkonats oder -fluorosulfonats färbt. Vorzugsweise geht man mit dem Fasermaterial in eine Flotte ein, die Säure und das Hilfsmittel enthält und eine Temperatur von 30 bis 70 °C aufweist. Anschliessend wird die Farbstoffmischung und das Alkali- oder Ammoniumfluorid, -fluorosilikat, -fluoroborat, -fluorozirkonat oder -fluorosulfonat zugegeben und die Temperatur des Färbebades mit einer Aufheizrate von 0,75 bis 3 °C pro Minute, gegebenenfalls mit einem Temperaturstop während des Aufheizens, gesteigert, um im angegebenen Temperaturbereich von 80 °C bis 105 °C vorzugsweise 30 bis 120 Minuten zu färben. Am Schluss wird das Bad abgekühlt und das gefärbte Material wie üblich gespült und getrocknet.

Als textiles Fasermaterial aus natürlichen Polyamiden, das erfindungsgemäss gefärbt werden kann, sind vor allem Wolle, aber auch Mischungen aus Wolle/Polyamid, Wolle/Polyester, Wolle/Cellulose oder Wolle/Polyacrylnitril sowie Seide zu erwähnen. Das Fasermaterial kann dabei in den verschiedensten Aufmachungsformen vorliegen, wie z. B. als loses Material, Kammzug, Garn und Stückware oder als Teppich.

Eine besonders bevorzugte Ausführungsform des erfindungsgemässen Verfahrens ist dadurch gekennzeichnet, dass man natürliche Polyamidfasermaterialien, insbesondere Wolle, mit mindestens einer Farbstoffmischung gemäss obiger Definition in Gegenwart von Natriumfluorid, Ammoniumfluorosilikat oder Natriumfluorosilikat, vorzugsweise in der zwei- bis dreifachen Gewichtsmengen, bezogen auf die Gewichtsmenge an eingesetztem 1 : 1-Chromkomplexfarbstoff, und gegebenenfalls in Gegenwart eines Egalisierhilfsmittel, enthaltend Verbindungen der Formel (2) oder Mischungen der Verbindungen der Formeln (1) und (2) oder (1), (2) und (3), und in Gegenwart von Natriumacetat, Ammoniumacetat oder Natriumsulfat bei einem pH von 4 bis 5 färbt.

Die in dem erfindungsgemässen Verfahren verwendeten sulfogruppenhaltigen, metallfreien Farbstoffe können eine oder mehrere faserreaktive Gruppen enthalten. Vorzugsweise werden in dem erfindungsgemässen Verfahren solche Farbstoffmischungen aus den erfindungsgemäss definierten 1 : 1-Metallkomplexfarbstoffen und den sulfogruppenhaltigen metallfreien Farbstoffen verwendet, worin die verwendeten metallfreien Farbstoffe entweder alle Reaktivfarbstoffe sind, oder alle von faserreaktiven Gruppen frei sind ; ganz besonders bevorzugt werden von faserreaktiven Gruppen freie sulfogruppenhaltige, metallfreie Farbstoffe verwendet.

Eine ganz besonders bevorzugte Ausführungsform des erfindungsgemässen Verfahrens ist dadurch gekennzeichnet, dass die erfindungsgemäss verwendeten Farbstoffmischungen aus solchen erfindungsgemäss definierten metallhaltigen und metallfreien Farbstoffen bestehen, die Färbungen gleicher Nuance ergeben, d. h. beispielsweise die Verwendung einer Mischung aus mindestens einem blaufärbenden sulfogruppenhaltigen 1 : 1-Metallkomplexfarbstoff und mindestens einem blaufärbenden, sulfogruppenhaltigen, metallfreien Farbstoff.

Das erfindungsgemässe Verfahren weist gegenüber den bekannten Verfahren für Fasermateiral aus natürlichen Polyamiden neben den bereits genannten noch folgende Vorteile auf. Das unter den genannten Färbebedingungen gefärbte Material zeichnet sich durch bessere Gesamtechtheiten, insbesondere bessere Nassechtheiten aus. Ein weiterer wesentlicher Vorteil besteht darin, dass die Farbstoffe praktisch vollständig aufgenommen werden.

Nach beendetem Färben sind die Färbebäder nahezu vollständig ausgezogen.

Gegenstand der Erfindung ist ferner ein Mittel zur Ausführung des erfindungsgemässen Verfahrens. Das Mittel ist eine feste Mischung enthaltend mindestens einen sulfogruppenhaltigen 1 : 1-Metallkomplexfarbstoff, insbesondere einen 1 : 1-Chromkomplexfarbstoff, und mindestens einen sulfogruppenhaltigen metallfreien Farbstoff und Alkali- oder Ammoniumfluorid, Alkali- oder Ammoniumfluorosilikat, Alkali- oder Ammoniumfluoroborat, Alkali- oder Ammoniumfluorozirkonat oder Alkali- oder Ammoniumfluorosulfonat.

Die erfindungsgemässe Mischung wird hergestellt, indem man mindestens einen sulfogruppenhaltigen 1 : 1-Chromkomplexfarbstoff und mindestens einen sulfogruppenhaltigen metallfreien Farbstoff mit Alkali- oder Ammoniumfluorid, Alkali- oder Ammoniumfluorosilikat, Alkali- oder Ammoniumfluoroborat, Alkali- oder Ammoniumfluorozirkonat oder Alkali- oder Ammoniumfluorosulfonat mischt. Der Mischprozess erfolgt beispielsweise in geeigneten Mühlen, z. B. Kugel- oder Stiftmühlen, sowie in Knetern oder Mixern.

Bevorzugt sind Mischungen, welche ausser der definitionsgemässen Farbstoffmischung Natrium- oder Ammoniumfluorid oder Natrium- oder Ammoniumfluorosilikat enthalten.

Die festen Mischungen können zum Färben von natürlichen oder synthetischen textilen Polyamidfasermaterialien verwendet werden.

Für die festen Mischungen gelten die gleichen Bevorzugungen wie sie für das Verfahren angegeben sind.

Die nachfolgenden Beispiele dienen der Veranschaulichung der Erfindung. Darin sind die Teile Gewichtsteile und die Prozente Gewichtsprozente. Die Temperaturen sind in Celsiusgraden angegeben. Die Beziehung zwischen Gewichtsteilen und Volumenteilen ist dieselbe wie diejenige zwischen Gramm und Kubikzentimeter. Die angegebenen Farbstoffmengen beziehen sich auf handelsüblichen Farbstoff.

Beispiel 1

800 Teile Wollkammgarn werden in einem Färbebad, welches auf 20 000 Teile Wasser von 50°, 64 Teile Natriumsulfat, 24 Teile $(NH_4)_2SiF_6$ und 12 Teile eines Egalisierhilfsmittels, bestehend aus 24 Teilen der anionischen Verbindung der Formel

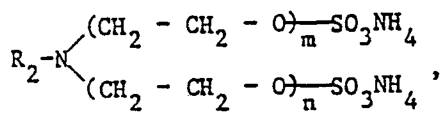

$R_2$ = $C_{16-18}$-Kohlenwasserstoffrest ; m + n = 7 ;
24 Teilen Teilen der quaternären Verbindung der Formel

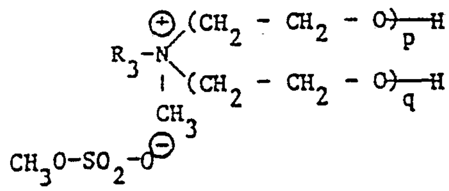

p + q = 34,

$R_3$ = $C_{20-22}$-Kohlenwasserstoffrest ;
5 Teilen Ammoniumchlorid
3 Teilen Oxalsäure und
44 Teilen Wasser, bezogen auf 100 Teile Egalisierhilfsmittel, während 15 Minuten bei 50° vorbehandelt. Nach Zugabe einer Lösung von 2,2 Teilen des 1 : 1-Chromkomplexes des Farbstoffes der Formel

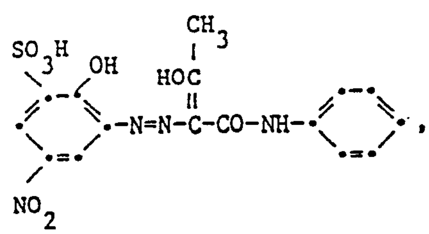

2,4 Teilen des 1 : 1-Chromkomplexes des Farbstoffes der Formel

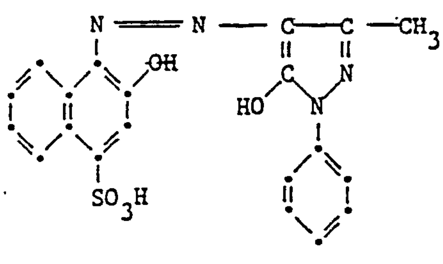

0,6 Teilen des 1 : 1-Chromkomplexes des Farbstoffes der Formel

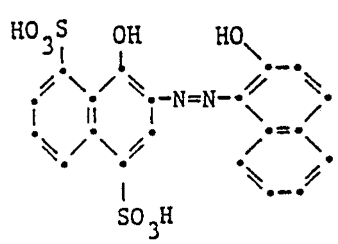

0,65 Teilen des 1 : 1-Chromkomplexes des Farbstoffes der Formel

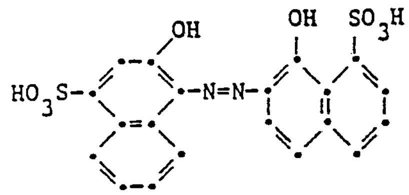

2,2 Teilen des Farbstoffes der Formel

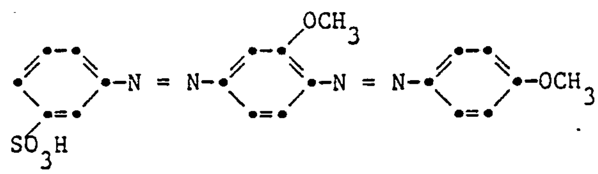

2,4 Teilen des Farbstoffes der Formel

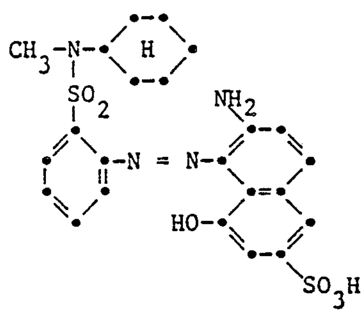

und 1,2 Teilen des Farbstoffes der Formel

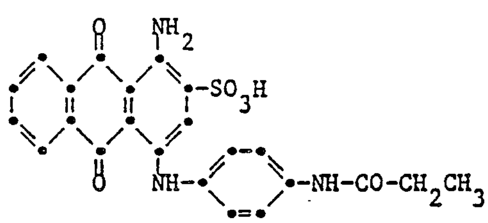

wird die Färbeflotte noch 10 Minuten bei 50° gehalten und anschliessend mit einer Aufheizrate von 0,8°/Minute auf 98° erwärmt. Der pH beträgt zu Anfang des Färbens 4,6. Nach 90 Minuten Färbezeit bei 98° wird auf 50° abgekühlt und die Färbeflotte abgelassen. Das braungefärbte Wollgarn wird je 10 Minuten erst bei 50°, dann bei Raumtemperatur gespült und wie üblich getrocknet. Die erhaltene mittelbraune Färbung ist ausgezeichnet faseregal und weist gute Echtheiten auf.

Beispiel 2

100 Teile Wollgewebe werden in einem Färbebad, welches auf 2 000 Teile Wasser von 40° 8 Teile Natriumsulfat, 1,2 Teile des in Beispiel 1 angegebenen Egalisierhilfsmittels und 1,5 Teile 85 %ige Ameinsensäure enthält, während 15 Minuten bei 40° vorbehandelt. Der pH-Wert beträgt 4,3.

Nach Zugabe einer Lösung von 1,9 Teilen Natriumfluorid und 0,695 Teilen des Farbstoffes der Formel

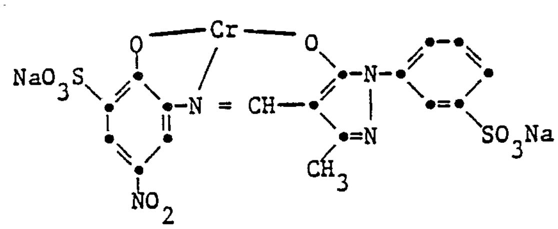

0,59 Teilen des Farbstoffes der Formel

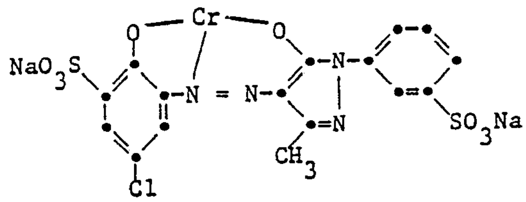

0,26 Teilen des Farbstoffes der Formel

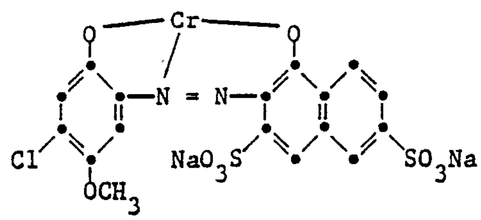

0,31 Teilen des Farbstoffes der Formel

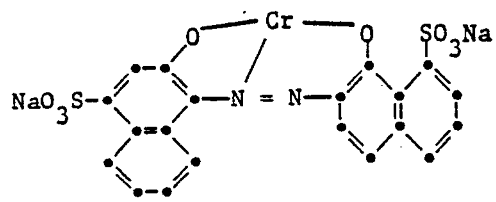

0,28 Teilen des Farbstoffes der Formel

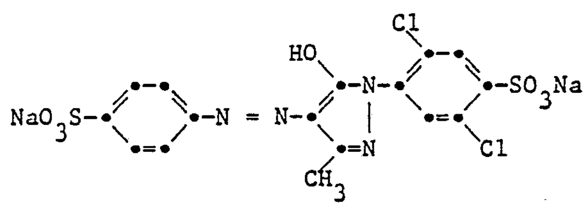

0,28 Teilen des Farbstoffes der Formel

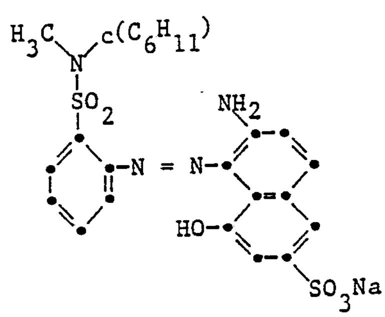

und 0,27 Teilen des Farbstoffes der Formel

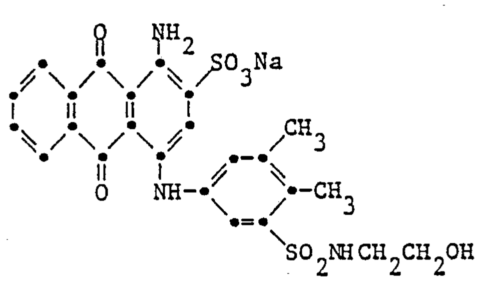

wird die Färbeflotte noch 10 Minuten bei 40° gehalten und anschliessend mit einer Aufheizrate von 1° per Minute auf 70° erwärmt. Nach 20 Minuten Färbezeit bei 70° wird die Färbeflotte auf 100° erwärmt. Nach 90 Minuten Färbezeit bei 100° wird auf 60° abgekühlt und die Färbeflotte abgelassen. Das braungefärbte Wollgewebe wird je 5 Minuten erst bei 50°, dann bei Raumtemperatur gespült und wie üblich getrocknet. Die erhaltene Färbung ist ausgezeichnet faseregal und weist gute Echtheiten auf.

Beispiel 3

100 Teile Wollgewebe werden in einem Färbebad, welches auf 1 000 Teile Wasser von 40°, 8 Teile Natriumsulfat, 1,5 Teile des in Beispiel 1 angegebenen Egalisierhilfsmittels und 2 Teile 85 %ige Ameisensäure enthält, während 10 Minuten bei 40° vorbehandelt. Der pH-Wert beträgt 3,8. Nach Zugabe einer Lösung enthaltend

1,2 Teile des Farbstoffes der Formel

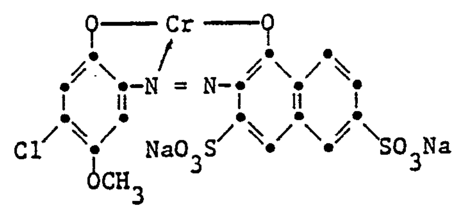

0,28 Teile des Farbstoffes der Formel

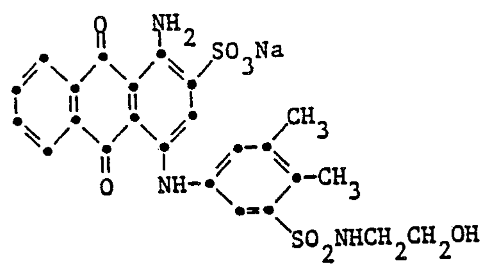

und 1,6 Teile $K_2(ZrF_6)$
wird die Färbeflotte noch 10 Minuten bei 40° gehalten und anschliessend mit einer Aufheizrate von 0,8° pro Minute auf 100° erwärmt. Nach 90 Minuten Färbezeit bei 100° wird auf 60° abgekühlt und die Färbeflotte abgelassen. Das blaugefärbte Wollgewebe wird wie üblich gespült und getrocknet. Die erhaltene mittelblaue Färbung ist ausgezeichnet faseregal und weist gute Echtheitseigenschaften auf.

Ein gleich gutes Ergebnis wird erzielt, wenn man anstelle der 1,6 Teile $K_2(ZrF_6)$ 1,8 Teile $Na_2SiF_6$ verwendet.

Beispiel 4

100 Teile Wollgewebe werden in einem Färbebad, welches auf 1 500 Teile Wasser von 40°, 8 Teile Natriumsulfat, 1,5 Teile des Egalisierhilfsmittels der nachstehenden Zusammensetzung :

14,6 Teile der anionischen Verbindung der Formel

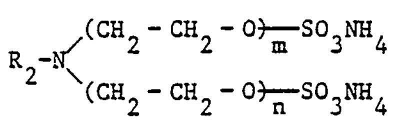 ,

$R_2$ = Kohlenwasserstoffrest des Talgfettamins, m + n = 8 ;

21 Teile der quaternären Verbindung der Formel

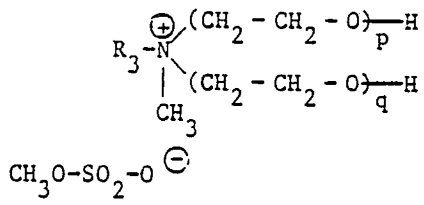

p + q = 34,

$R_3$ = $C_{20-22}$-Kohlenwasserstoffrest ;

7,7 Teile des Umsetzungsproduktes von Oleylalkohol mit 80 Mol Aethylenoxid ; und

7 Teile der Verbindung der Formel

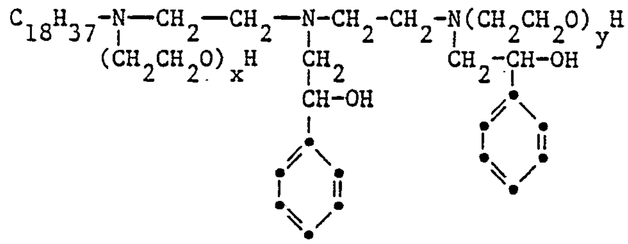

x + y = ca. 100,

sowie 49,7 Teile Wasser, bezogen auf 100 Teile des Egalisierhilfsmittelgemisches ;

und 1,5 Teile 85 %ige Ameisensäure enthält, während 15 Minuten bei 40° vorbehandelt. Der pH-Wert beträgt 4,5. Nach Zugabe einer Lösung enthaltend 1,94 Teile NaF, 1,66 Teile des Farbstoffes der Formel

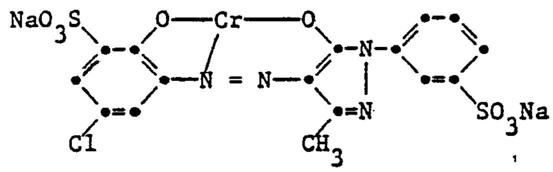

und 1,5 Teile des Farbstoffes der Formel

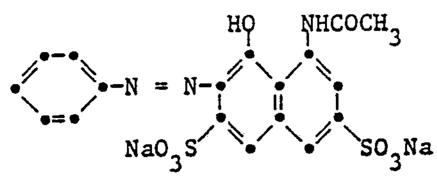

wird die Färbeflotte noch 10 Minuten bei 40° gehalten und anschliessend mit einer Aufheizrate von 0,8° pro Minute auf 100° erwärmt. Nach 90 Minuten Färbezeit bei 100° wird auf 50° abgekühlt und die Färbeflotte abgelassen. Das rotgefärbte Wollgewebe wird wie üblich gespült und getrocknet. Die erhaltene tiefrote Färbung ist ausgezeichnet faseregal und weist gute Echtheitseigenschaften auf.

Beispiel 5

100 Teile Wollgewebe werden in einem Färbebad, welches auf 2 000 Teile Wasser von 40° 8 Teile Natriumsulfat, 1,2 Teile des in Beispiel 1 angegebenen Egalisierhilfsmittels und 1,5 Teile 85 %ige Ameisensäure enthält, während 15 Minuten bei 40° vorbehandelt. Der pH-Wert beträgt 4,3. Anschliessend gibt man zu der Färbeflotte 1,4 Teile einer festen Mischung bestehend aus

0,425 Teilen NaF,

0,28 Teilen des Farbstoffes der Formel

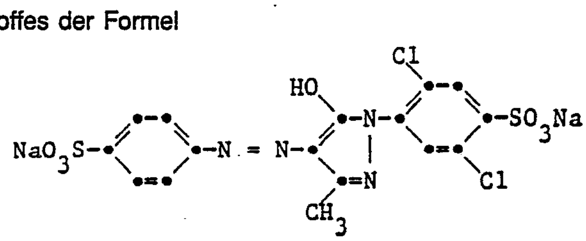

und 0,695 Teilen des Farbstoffes der Formel

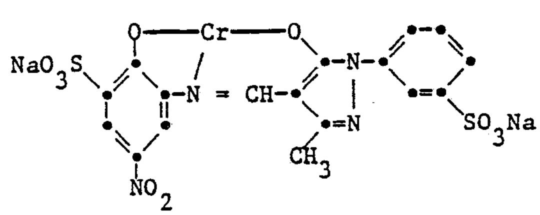

1,56 Teile einer festen Mischung bestehend aus
0,69 Teilen NaF,
0,59 Teilen des Farbstoffes

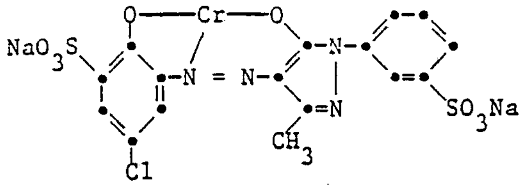

und 0,28 Teile des Farbstoffes der Formel

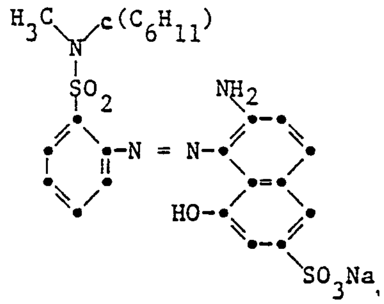

und 1,63 Teile einer festen Mischung bestehend aus
0,79 Teilen NaF,
0,26 Teilen des Farbstoffes der Formel

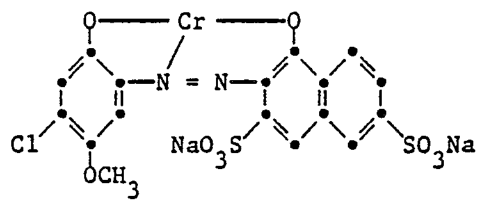

0,31 Teilen des Farbstoffes der Formel

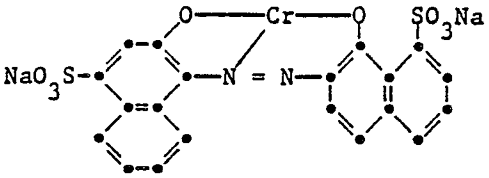

und 0,27 Teilen des Farbstoffes der Formel

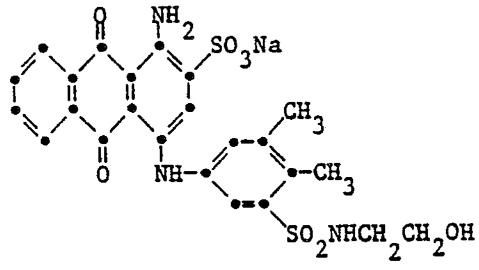

Dann wird die Färbeflotte noch 10 Minuten bei 40° gehalten und anschliessend mit einer Aufheizrate von 1° pro Minute auf 70° erwärmt. Nach 20 Minuten Färbezeit bei 70° wird die Färbeflotte auf 100° erwärmt. Nach 90 Minuten Färbezeit bei 100° wird auf 60° abgekühlt und die Färbeflotte abgelassen. Das braungefärbte Wollgewebe wird je 5 Minuten erst bei 50°, dann bei Raumtemperatur gespült und wie

üblich getrocknet. Die erhaltene Färbung ist ausgezeichnet faseregal und weist gute Eschtheiten auf.

**Patentansprüche**

1. Verfahren zum Färben von Fasermaterial aus natürlichen Polyamiden aus wässriger Flotte mit Farbstoffmischungen in Gegenwart von Alkali- oder Ammoniumsalzen und gegebenenfalls in Gegenwart von Hilfsmitteln, dadurch gekennzeichnet, dass man diese Fasermaterialien mit einer Mischung enthaltend mindestens einen sulfogruppenhaltigen 1 : 1-Metallkomplexfarbstoff und mindestens einen sulfogruppenhaltigen metallfreien Farbstoff in Gegenwart von Alkali- oder Ammoniumfluorid, Alkali- oder Ammoniumfluorosilikat, Alkali- oder Ammoniumfluoroborat, Alkali- oder Ammoniumfluorozirkonat oder Alkali- oder Ammoniumfluorosulfonat, bei einem pH-Wert von 3 bis 7 färbt.

2. Verfahren gemäss Anspruch 1, dadurch gekennzeichnet, dass man in Gegenwart von Natrium- oder Kaliumfluorid färbt.

3. Verfahren gemäss Anspruch 1, dadurch gekennzeichnet, dass man die halbe bis vierfache Gewichtsmenge, vorzugsweise die ein- bis dreifache und insbesondere die zwei bis dreifache Gewichtsmenge, bezogen auf die eingesetzte Farbstoff-Gewichtsmengen, an Alkali- oder Ammoniumfluorid, Alkali- oder Ammoniumfluorosilikat, Alkali- oder Ammoniumfluoroborat, Alkali- oder Ammoniumfluorozirkonat oder Alkali- oder Ammoniumfluorosulfonat verwendet.

4. Verfahren gemäss Anspruch 1, dadurch gekennzeichnet, dass man zur Einstellung des pH-Wertes von 3 bis 7 eine organische Säure, vorzugsweise Ameisen- oder Essigsäure, und gegebenenfalls zusätzlich ein von Ammonium- oder Alkalifluorid, -fluorosilikat, -fluoroborat, -fluorozirkonat oder -fluorosulfonat verschiedenes Ammonium- oder Alkalisalz insbesondere Alkaliacetat oder Alkalisulfat, vorzugsweise Natriumacetat oder Natriumsulfat, verwendet.

5. Verfahren gemäss einem der Ansprüche 1 bis 4, dadurch gekennzeichnet, dass man bei einem pH-Wert von 3 bis 6, insbesondere 3,5 bis 5, vorzugsweise 4 bis 5, färbt.

6. Verfahren gemäss Anspruch 1, dadurch gekennzeichnet, dass man in Gegenwart eines Egalisierhilfsmittels oder einer Mischung von Egalisierhilfsmitteln färbt.

7. Verfahren gemäss Anspruch 6, dadurch gekennzeichnet, dass man 0,3 bis 3 Gewichtsprozent, vorzugsweise 1 bis 2 Gewichtsprozent, bezogen auf das Fasermaterial des Egalisierhilfsmittels oder der Egalsierhilfsmittelmischung verwendet.

8. Verfahren gemäss Anspruch 1, dadurch gekennzeichnet, dass man Farbstoffmischungen verwendet, welche mindestens einen 1 : 1-Chromkomplexazo- oder -azomethin-farbstoff mit 1 bis 3 Sulfonsäuregruppen, vorzugsweise 1 bis 2 Sulfonsäuregruppen, und mindestens einen metallfreien Farbstoff mit 1 bis 2 Sulfonsäuregruppen enthalten.

9. Verfahren gemäss Anspruch 8 zum Trichromie-Färben, dadurch gekennzeichnet, dass man eine Mischung von mindestens drei 1 : 1-Chromkomplex- azo- oder -azomethin-farbstoffen aus gelb- bzw. orange-, rot- und blaufärbenden Farbstoffen und mindestens einem metallfreien Farbstoff aus gelb- bzw. orange- und/oder rot- und/oder blaufärbenden Farbstoffen verwendet.

10. Verfahren gemäss Anspruch 8, dadurch gekennzeichnet, dass man als 1 : 1-Chromkomplexazo- oder -azomethin-farbstoffe solche der Formel

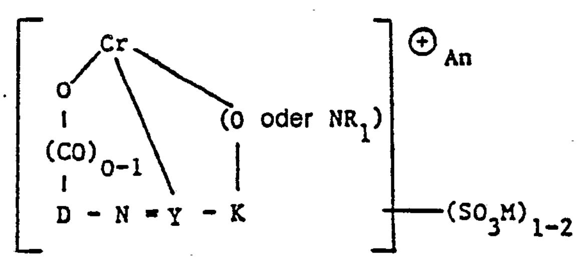

(4)

verwendet, worin die Reste —$(CO)_{0-1}$—O— und (—O— oder —$NR_1$) in Nachbarstellung zur Azobrücke an D bzw. K gebunden sind, D ein gegebenenfalls durch Halogen, $C_{1-4}$-Alkyl, $C_{1-4}$-Alkoxy, Nitro oder Sulfamoyl substituierter Benzol- oder Naphthalinrest, K ein gegebenenfalls durch Halogen, $C_{1-4}$-Alkyl, $C_{1-4}$-Alkoxy, $C_{2-4}$-Alkanoylamino, Sulfamoyl oder Hydroxy substituierter Phenyl-, Naphthyl-, 1-Phenyl-3-methyl-pyrazolon(5)-, Acetoacetamid- oder Chinolinrest und $R_1$ Wasserstoff, M ein Alkalikation und An ein Anion ist, und Y das Stickstoffatom oder die CH-Gruppe bedeutet.

11. Verfahren gemäss Anspruch 1, dadurch gekennzeichnet, dass man Mischungen von sulfogruppenhaltigen 1 : 1-Metallkomplexfarbstoffen und sulfogruppenhaltigen metallfreien Farbstoffen im Gewichtsverhältnis von 40 : 60 bis 95 : 5 verwendet.

12. Verfahren gemäss Anspruch 8, dadurch gekennzeichnet, dass man als metallfreie sulfogruppenhaltige Farbstoffe solche der Monoazo-, Polyazo-, Anthrachinon-, Xanthen- oder Triphenylmethanreihe verwendet.

13. Verfahren gemäss Anspruch 1, dadurch gekennzeichnet, dass man als Fasermaterial Seide oder Wolle verwendet.

14. Verfahren gemäss Anspruch 13, dadurch gekennzeichnet, dass man als Fasermaterial Wolle verwendet.

15. Mischung enthaltend mindestens einen sulfogruppenhaltigen 1 : 1-Metallkomplexfarbstoff, insbesondere einen 1 : 1-Chromkomplexfarbstoff, mindestens einen metallfreien sulfogruppenhaltigen Farbstoff und Alkali- oder Ammoniumfluorid, Alkali- oder Ammoniumfluorosilikat, Alkali- oder Ammoniumfluoroborat, Alkali- oder Ammoniumfluorozirkonat oder Alkali- oder Ammoniumfluorosulfonat.

## Claims

1. A process for dyeing natural polyamide fibre material from an acqueous liquor with mixtures of dyes, in the presence of an alkali metal salt or an ammonium salt and optionally in the presence of an assistant, which process comprises dyeing said fibre material with a mixture containing at least one 1 : 1 metal complex dye which contains sulfo groups and at least one metal-free dye which contains sulfo groups, in the presence of an alkali metal or ammonium fluoride, an alkali metal or ammonium fluorosilicate, an alkali metal or ammonium fluoroborate, an alkali metal or ammonium fluorozirconate or an alkali metal or ammonium fluorosulfonate, at a pH of from 3 to 7.

2. A process according to claim 1, wherein dyeing is carried out in the presence of sodium fluoride or potassium fluoride.

3. A process according to claim 1, which comprises using half to four times the amount by weight, preferably one to three times and, especially, two to three times, the amount by weight of alkali metal or ammonium fluoride, alkali metal or ammonium fluorosilicate, alkali metal or ammonium fluoroborate, alkali metal or ammonium fluorozirconate or alkali metal or ammonium fluorosulfonate, based on the amount by weight of dye employed.

4. A process according to claim 1, wherein the pH of 3 to 7 is adjusted with an organic acid, preferably formic acid or acetic acid, and which optionally comprises using, in addition to an alkali metal or ammonium fluoride, alkali metal or ammonium fluorosilicate, alkali metal or ammonium fluoroborate, alkali metal or ammonium fluorozirconate or alkali metal or ammonium fluorosulfonate, another ammonium or alkali metal salt, especially an alkali metal acetate or alkali metal sulfate, preferably sodium acetate or sodium sulfate.

5. A process according to any one of claims 1 to 4, wherein dyeing is carried out at a pH of from 3 to 6, especially from 3.5 to 5 and, preferably, from 4 to 5.

6. A process according to claim 1, wherein dyeing is carried out in the presence of a levelling assistant or a mixture of levelling assistants.

7. A process according to claim 6, which comprises using 0.3 to 3 percent by weight, preferably 1 to 2 percent by weight, based on the fibre material, of levelling assistant or levelling assistant mixture.

8. A process according to claim 1, which comprises using a dye mixture that contains at least one 1 : 1 chromium complex azo or azomethine dye containing 1 to 3 sulfo groups, preferably 1 or 2 sulfo groups and at least one metal-free dye containing 1 or 2 sulfo groups.

9. A process according to claim 8 for trichromatic dyeing, which comprises using a mixture of at least three 1 : 1 chromium complex azo or azomethine dyes selected from dyes that give yellow or orange, red and blue dyeings, and at least one metal-free dye selected from dyes that give yellow or orange and/or red and/or blue dyeings.

10. A process according to claim 8, wherein the 1 : 1 chromium complex azo or azomethine dyes used are those of the formula

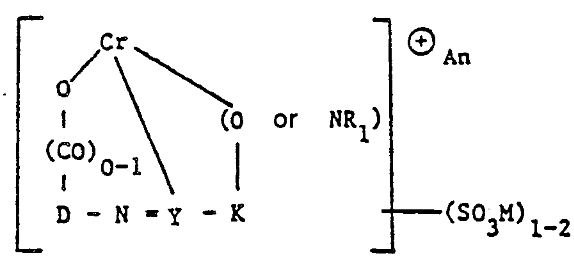

(4)

in which the radicals $—(CO)_{0-1}—O$ and —(O— or $—NR_1$) are linked to D and K adjacent to the azo bridge, D is a radical of the benzene or naphthalene series which is unsubstituted or substituted by halogen $C_1$-$C_4$ alkyl, $C_1$-$C_4$alkoxy, nitro or sulfamoyl, K is a phenyl, naphthyl, 1-phenyl-3-methylpyrazol-5-one, acetoacetamide or quinoline radical, each unsubstituted or substituted by halogen, $C_1$-$C_4$alkyl, $C_1$-$C_4$alkoxy, $C_2$-$C_4$alkanoylamino, sulfamoyl or hydroxyl, $R_1$ is hydrogen, M is an alkali metal cation, and An is an anion, and Y is a nitrogen atom or the —CH— group.

11. A process according to claim 1, which comprises using mixtures of sulfo-containing 1 : 1 metal complex dyes and sufo-containing metal-free dyes in the weight ratio of 40 : 60 to 95 : 5.

12. A process according to claim 8, wherein the metal-free sulfocontaining dyes are those of the monoazo, polyazo, anthraquinone, xanthene or triphenylmethane series.

13. A process according to claim 1, wherein the fibre material used is silk or wool.

14. A process according to claim 13, wherein the fibre material used is wool.

15. A mixture containing at least one sulfo-containing 1 : 1 metal complex dye, especially a 1 : 1 chromium complex dye, at least one metal-free sulfo-containing dye and an alkali metal or ammonium fluoride, an alkali metal or ammonium fluorosilicate, an alkali metal or ammonium fluoroborate, an alkali metal or ammonium fluorozirconate or an alkali metal or ammonium fluorosulfonate.

## Revendications

1. Procédé de teinture de matériaux fibreux en polyamides naturels, en bain aqueux, avec des mélanges de colorants, en présence de sels de métaux alcalins ou d'ammonium et éventuellement en présence d'adjuvants, caractérisé en ce que l'on teint ces matériaux fibreux, à un pH de 3 à 7, avec un mélange contenant au moins un colorant à complexe métallique 1 : 1 comportant des groupes sulfo et au moins un colorant non métallé comportant des groupes sulfo, en présence d'un fluorure d'un métal alcalin ou d'ammonium, d'un fluosilicate de métal alcalin ou d'ammonium, d'un fluoborate de métal alcalin ou d'ammonium, d'un fluozirconate de métal alcalin ou d'ammonium ou d'un fluosulfonate de métal alcalin ou d'ammonium.

2. Procédé conforme à la revendication 1, caractérisé en ce que l'on effectue la teinture en présence de fluorure de potassium ou de sodium.

3. Procédé conforme à la revendication 1, caractérisé en ce que l'on utilise une quantité de fluorure de métal alcalin ou d'ammonium, de fluosilicate de métal alcalin ou d'ammonium, de fluoborate de métal alcalin ou d'ammonium, de fluozirconate de métal alcalin ou d'ammonium ou de fluosulfonate de métal alcalin ou d'ammonium dont le poids représente de la moitié au quadruple, de préférence du simple au triple et en particulier du double au triple du poids de colorants utilisé.

4. Procédé conforme à la revendication 1, caractérisé en ce que, pour ajuster le pH à une valeur de 3 à 7, on utilise un acide organique, de préférence de l'acide formique ou de l'acide acétique, et en plus, éventuellement, un sel d'ammonium ou de métal alcalin différent des fluorure, fluosilicate, fluoborate, fluozirconate ou fluosulfonate de métal alcalin ou d'ammonium, en particulier un acétate alcalin ou un sulfate alcalin, de préférence de l'acétate de sodium ou du sulfate de sodium.

5. Procédé conforme à l'une des revendications 1 à 4, caractérisé en ce que l'on effectue la teinture à un pH de 3 à 6, en particulier de 3,5 à 5 et de préférence de 4 à 5.

6. Procédé conforme à la revendication 1, caractérisé en ce que l'on effectue la teinture en présence d'un adjuvant d'unisson ou d'un mélange d'adjuvants d'unisson.

7. Procédé conforme à la revendication 6, caractérisé en ce que l'on utilise de 0,3 à 3 % en poids, de préférence de 1 à 2 % en poids, par rapport au matériau fibreux, de l'adjuvant d'unisson ou du mélange d'adjuvants d'unisson.

8. Procédé conforme à la revendication 1, caractérisé en ce que l'on utilise des mélanges de colorants qui contiennent au moins un colorant azoïque ou azométhine à complexe de chrome 1 : 1 et comportant de 1 à 3 groupes sulfo, de préférence de 1 à 2 groupes sulfo, et au moins un colorant non métallé comportant de 1 à 2 groupes sulfo.

9. Procédé conforme à la revendication 8 pour la teinture en trichromie, caractérisé en ce que l'on utilise un mélange d'au moins trois colorants azoïques ou azométhines à complexe de chrome 1 : 1, choisis parmi les colorants teignant en jaune ou orangé, rouge et bleu, et au moins un colorant non métallé choisi parmi les colorants teignant en jaune ou orangé et/ou rouge et/ou bleu.

10. Procédé conforme à la revendication 8, caractérisé en ce que l'on utilise, comme colorants azoïques ou azométhines à complexe de chrome 1 : 1, ceux de formule

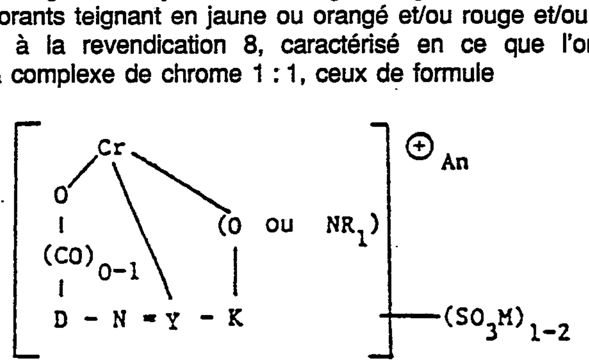

(4)

dans lesquels les restes $—(CO)_{0—1}O—$ et ($—O—$ ou $—NR_1$) sont respectivement liés à D et K en position voisine du pont azo, D est un reste de benzène ou de naphtalène éventuellement substitué par halogène, alkyle en $C_{1—4}$, alcoxy en $C_{1—4}$, nitro ou sulfamyle, K est un reste phényle, naphtyle, 1-phényl-3-méthyl-

pyrazolone-(5)-, acétoacétamide ou quinoline, éventuellement substitué par halogène, alkyle en $C_{1-4}$, alcoxy en $C_{1-4}$, alcanoylamino en $C_{2-4}$, sulfamyle ou hydroxy, et $R_1$ représente un atome d'hydrogène, M représente un cation alcalin et An un anion, et Y représente un atome d'azote ou le groupe CH.

11. Procédé conforme à la revendication 1, caractérisé en ce que l'on utilise des mélanges de colorants à complexe métallique 1 : 1 comportant des groupes sulfo et de colorants non métallés comportant des groupes sulfo en des proportions pondérales allant de 40 : 60 à 95 : 5.

12. Procédé conforme à la revendication 8, caractérisé en ce que l'on utilise, en tant que colorants non métallés comportant des groupes sulfo, ceux des séries monoazoïque, polyazoïque, anthraquinone, xanthène ou triphénylméthane.

13. Procédé conforme à la revendication 1, caractérisé en ce que l'on utilise, en tant que matériau fibreux, de la soie ou de la laine.

14. Procédé conforme à la revendication 13, caractérisé en ce que l'on utilise de la laine comme matériau fibreux.

15. Mélange contenant au moins un colorant à complexe métallique 1 : 1 et comportant des groupes sulfo, en particulier au moins un colorant à complexe de chrome 1 : 1, au moins un colorant non métallé comportant des groupes sulfo, et un fluorure de métal alcalin ou d'ammonium, un fluosilicate de métal alcalin ou d'ammonium, un fluoborate de métal alcalin ou d'ammonium, un fluozirconate de métal alcalin ou d'ammonium ou un fluosulfonate de métal alcalin ou d'ammonium.